# FASCICULE DE BREVET EUROPEEN

(11) **EP 2 577 118 B1**
(45) Date de publication et mention de la délivrance du brevet: **19.03.2014**
(21) Numéro de dépôt: 11724265.1
(22) Date de dépôt: 04.05.2011
(51) Int. Cl.: F16J 15/08, F16K 25/00, F16K 1/226, F16K 1/228

(54) **ROBINET A JOINT D'ETANCHEITE EN DEUX PIECES**
VENTIL MIT ZWEITEILIGER DICHTUNG
VALVE WITH TWO PART SEAL

(30) Priorité: 04.06.2010 FR 1002373
(43) Date de publication de la demande: 10.04.2013
(73) Titulaire: KSB S.A.S, 92635 Gennevilliers Cedex (FR)
(72) Inventeur: DUBOY, Dominique, F-33170 Gradignan (FR)
(74) Mandataire: Eidelsberg, Olivier Nathan
(86) Numéro de dépôt international: PCT/FR2011/000272
(87) Numéro de publication internationale: WO 2011/151533

(56) Documents cités:
- DE-A1- 2 706 529
- FR-A1- 2 751 716
- US-A- 4 231 546

## Description

La présente invention se rapporte aux robinets comprenant un joint d'étanchéité annulaire en tôle flexible interposé entre un corps et un obturateur. Elle se rapporte tout particulièrement aux robinets à papillon à triple excentration présentant ainsi un décalage de l'arbre de manoeuvre du papillon par rapport à son plan, une excentration de l'arbre de manoeuvre du papillon par rapport à l'axe de la tuyauterie et une inclinaison du cône d'usinage du corps et/ou du papillon.

Ces robinets à triple excentration permettent d'atteindre une pression de service allant jusqu'à 100 bar et donnent satisfaction lorsque la pression à étancher est appliquée dans le sens autoclave de l'obturateur. Ce côté est généralement aussi appelé le sens préférentiel.

Les valeurs de fuite constatées dans cette configuration sont communément comprises entre 1 et 0,1 Ncm³/mn par millimètre de diamètre du papillon.

Dans ces constructions, lorsque la pression est appliquée dans le sens opposé, dit non-autoclave, la performance d'étanchéité est généralement moindre, la fuite valant communément le double de celle constatée en sens autoclave. Ces robinets ne sont donc pas parfaitement bidirectionnels.

Cela est particulièrement vrai pour tous les joints métalliques qui assurent simultanément l'étanchéité statique entre eux-mêmes et l'appui du joint et l'étanchéité dynamique entre eux-mêmes et le siège d'étanchéité. Cela est valable que les joints soient massifs, comme dans les brevets FR2674599, EP0145632, DE10250774, FR2698147, DE2057305, ou bien lamellaires, comme dans les brevets DE2706529 A1, FR2773202 et US3945398.

La raison majeure de ce comportement différentiel est que le serrage énergique du joint pour obtenir l'étanchéité statique contrarie fortement la liberté du joint à assurer la pression de contact contre le siège pour l'étanchéité dynamique.

Dans le cas de l'emploi de joints d'étanchéité en tôle, comme.dans les brevets GB1536837, FR2751716 et EP0166641, l'étanchéité statique est correctement assurée et la souplesse du joint assure, également correctement, l'étanchéité dynamique en sens autoclave. Cependant, cette même souplesse contrarie fortement l'étanchéité au cas où la pression est appliquée en sens non-autoclave, en raison du déplacement du joint.

Dans l'art antérieur, on trouve des joints qui séparent la fonction d'étanchéité statique de la fonction d'étanchéité dynamique. Ceci est particulièrement bien exposé dans les brevets FR2398940, FR2615580 et FR2497905. Cette technologie présente l'avantage d'assurer une parfaite étanchéité statique mais présente un inconvénient majeur : l'étanchéité garantie de 0,1 à 1 Ncm³/mn pour une longueur linéaire d'un millimètre de diamètre de joint, n'est valable que jusqu'à 25 bar en étanchéité dynamique. De plus, les efforts développés à des pressions supérieures à 25 bar induisent des efforts de contact et des coefficients de frottement entre la tôle roulée et le siège qui conduisent au déroulement de la tôle extérieure et donc à la destruction du joint.

L'invention vise un robinet capable d'étancher des pressions de service jusqu'à 100 bar avec un niveau d'étanchéité meilleur que 0,1 Ncm³/mn par millimètre de diamètre de l'obturateur, l'étanchéité étant équivalente en sens autoclave et en sens non autoclave.

On y parvient suivant l'invention par un robinet comprenant un joint d'étanchéité annulaire en tôle flexible interposé entre un corps et un obturateur, caractérisé en ce que le joint est en deux pièces, chaque pièce, d'un seul tenant, est fixée par une partie de fixation, l'une au corps, l'autre à l'obturateur, chaque pièce a une partie courbe, la partie courbe de l'une des pièces tournant vers la droite et celle de l'autre pièce tournant vers la gauche, et les pièces sont fixées dans le corps et l'obturateur, de manière à venir en contact par la face convexe de leur partie courbe.

Dans la majorité des cas d'application des divers concepts d'étanchéité de robinets à papillon, les solutions proposées tiennent compte du comportement des pièces en prenant pour hypothèse que le corps et le papillon soumis à la pression sont définis pour résister et sont supposés non déformables. Dans la réalité, il en va tout autrement. En effet, toute pièce soumise à des contraintes externes se déforme. Ce phénomène physique peut être négligeable si les pièces sont surdimensionnées mais peut provoquer des disfonctionnements rédhibitoires pour l'étanchéité.

Ce phénomène est peu ou pas influent, lorsque les pressions à étancher sont inférieures à 25 bar, mais lorsque ces pressions atteignent 100 bar, ou bien les déformées sont inacceptables pour l'étanchéité, ou bien le surdimensionnement des pièces conduit à des papillons très épais qui réduisent la section de passage du fluide dans la veine fluide et donc à des pertes de charge inacceptables pour.ce type de robinet.

La déformée sous une pression de 16 bar d'un papillon de diamètre de 1 000 millimètres reste acceptable, car inférieure à 1 millimètre, celle de chacune des ailes externes atteint des valeurs de l'ordre de plusieurs millimètres (4,67 mm).

On comprend donc mieux dans ces conditions que le contact entre l'obturateur, son joint d'étanchéité et le siège ne soit plus assuré de manière homogène et perturbe fortement l'étanchéité du robinet.

Alors que jusqu'ici, on a toujours prévu des joints d'une seule pièce fixés dans l'un du corps ou de l'obturateur, pour obtenir l'étanchéité statique, et en contact avec l'autre de l'obturateur et du corps, pour obtenir l'étanchéité dynamique, en assurant ainsi l'étanchéité dans l'âme du joint par sa continuité même, l'invention s'écarte radicalement de cette conception en constituant le joint en deux pièces avec donc un intervalle entre les deux pièces qu'il va falloir rendre étanche pour obtenir l'étanchéité dynamique et en multipliant par deux l'étanchéité statique à réaliser, le joint devant être fixé aussi bien au corps qu'à l'obturateur, mais avec l'avantage que l'obturation de l'intervalle entre les deux pièces du joint se fait entre deux pièces, qui n'ont pas, comme le corps et l'obturateur, à assumer des fonctions autres que celles de l'étanchéité dynamique. On peut ainsi réaliser et conformer les deux pièces pour obtenir la meilleure étanchéité dynamique possible.

On a obtenu de bons résultats lorsque la tôle a une épaisseur comprise entre 1 et 4 millimètres.

On peut conformer les deux pièces du joint, de manière à ce que les segments des parties courbes, par lesquelles les deux pièces viennent en contact, aient un rayon de courbure représentant de trois à cinq fois l'épaisseur de la tôle. Le rayon de courbure peut s'étendre sur un arc de 50 à 60°, tandis que les parties courbes s'étendent sur un angle de 270°.

Suivant un mode de réalisation particulièrement efficace pour l'étanchéité, le segment, par lequel les parties courbes viennent en contact, est suivi, dans le sens partant de la partie de fixation, d'un segment s'étendant sur un arc représentant de cinq à quinze fois l'épaisseur de la tôle terminé par un segment rectiligne, et est précédé, dans le sens allant vers la partie de fixation, d'un segment adjacent ayant un rayon de courbure représentant de cinq à quinze fois l'épaisseur de la tôle, d'un segment ayant un rayon de courbure représentant de trois à cinq fois l'épaisseur de la tôle et d'un segment ayant un rayon de courbure représentant de une à deux fois l'épaisseur de la tôle.

Dans un mode de réalisation préféré, le robinet est un robinet à papillon à triple excentration et le corps et le papillon définissent respectivement des logements de fixation des parties de fixation du joint et des butées pour les extrémités de la section rectiligne terminant leurs parties courbes.

De préférence, les parties courbes entrent en contact, alors qu'il reste un angle de 1 à 5° avant d'atteindre la pleine fermeture. Cette course résiduelle de 1 à 5° permet d'obtenir une précontrainte des deux pièces du joint l'une contre l'autre, lorsque le robinet est complètement fermé. Cela favorise l'étanchéité aux basses pressions.

Aux dessins annexés, donnés uniquement à titre d'exemple :
- la Figure 1: est une vue en coupe suivant un plan passant par l'axe d'une canalisation d'un robinet à papillon à triple excentration qui y est monté ;
- la Figure 2: est une vue à plus grande échelle d'une partie de la Figure 1 ;
- la Figure 3: est une vue à plus grande échelle de l'une des pièces constituant le joint ;
- la Figure 4: est une vue illustrant le montage et la fermeture sans pression du robinet ; tandis que
- la Figure 5: montre la position des pièces en fermeture complète du robinet de la Figure 4 ; et que
- la Figure 6: montre la position des pièces lorsqu'une haute pression s'établit du côté amont ; et
- la Figure 7: est une vue semblable à la Figure 2 d'une variante de réalisation.

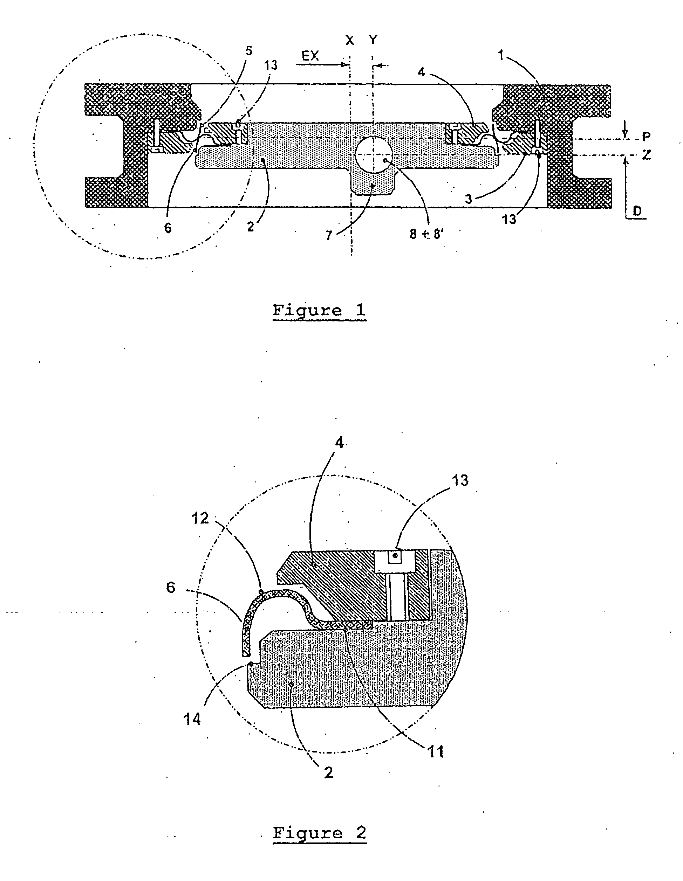

En se reportant à la Figure 1, le robinet à papillon qui est représenté comprend un corps 1 de forme tubulaire ayant une entrée et une sortie par lequel le fluide est véhiculé. Ce corps 1 est coaxial suivant l'axe X avec la tuyauterie qui lui est connectée.

Dans ce corps 1 est installé un obturateur 2 en forme de disque portant deux moyeux 7, dans lesquels sont placés un arbre de manoeuvre supérieur 8 et un axe inférieur de pivotement 8'. L'obturateur 2 est manoeuvré en rotation par l'arbre 8 autour de l'axe Y. La distance entre l'axe X et l'axe Y définit l'excentration EX. D'autre part, l'arbre 8 et l'axe 8' suivant l'axe orthogonal Z sont décalés du plan de contact d'étanchéité P d'une valeur D. Cette distance est appelée le décalage.

Ces deux valeurs EX et D sont déterminées pour permettre un dégagement rapide du contact entre les surfaces d'étanchéité lors de l'ouverture du robinet, afin de limiter au maximum les frottements et donc l'usure des surfaces d'étanchéité.

Comme montré à la Figure 2, l'obturateur 2 est pourvu d'un logement, qui permet d'installer un joint d'étanchéité 6 constitué d'une tôle formée suivant un profil constitué d'une partie plane 11, circulaire en forme de couronne et une partie courbe 12. La partie plane 11, serrée entre la contre-bride 4 et le papillon 2 par les vis de serrage 13, assure l'étanchéité statique. La partie courbe 12 concourant avec le joint d'étanchéité 5, placé sur le corps 1, assure l'étanchéité dynamique. Un épaulement 14 ménagé dans l'obturateur 2 permet de limiter la déformation du joint en tôle 6.

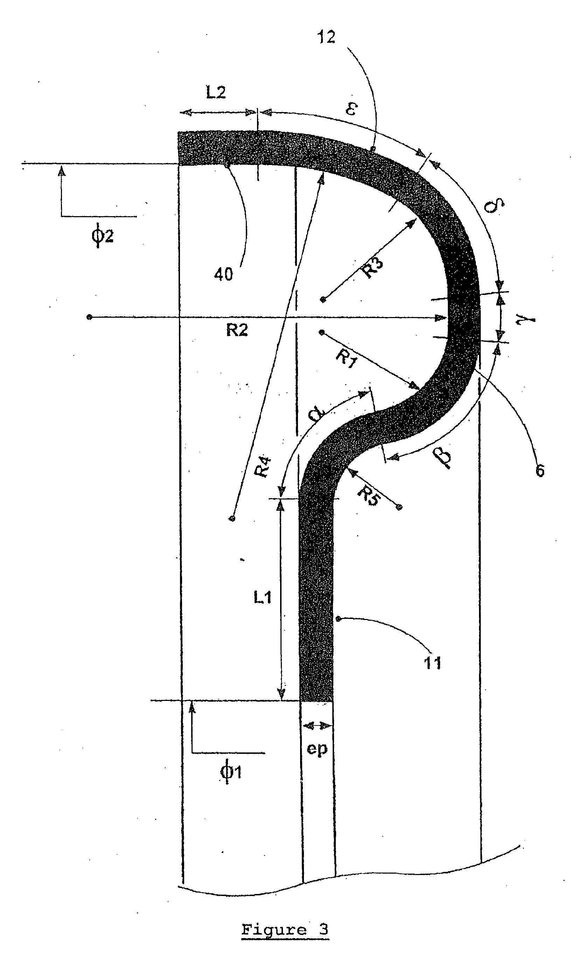

La Figure 3 montre la section du joint 6 dans la partie courbe 12. Le joint 6 de tôle souple, placé dans le papillon, est constitué d'une tôle profilée en forme de couronne circulaire ayant une épaisseur ep comprise entre 1 et 4 millimètres. Le profil de ce joint vu en coupe est montré à la Figure 3.

Le profil de ce joint est caractérisé par un diamètre intérieur 01 correspondant au diamètre extérieur du logement du papillon 2 destiné à recevoir ce joint. A partir de ce diamètre intérieur, le profil s'étend vers l'extérieur du papillon par un segment droit L1 destiné à former une face plane en ferme de couronne afin d'assurer une étanchéité statique entre le papillon 2 et la contre-bride 4. La longueur de ce segment vaut de cinq à dix fois l'épaisseur ep de la tôle.

A ce segment droit L1 se raccorde tangentiellement la succession des arcs α, β, γ, δ et ε, dont les valeurs d'angle et de rayons respectifs R5, R1, R1, R3 et R4 sont donnés ci-dessous.

A l'extrémité de l'arc ε s'étend, tangentiellement, une section droite L2, perpendiculaire à la section droite L1 et valant de deux à cinq fois l'épaisseur ep de la tôle.

Le diamètre extérieur 02 est déterminé par l'épaulement 14 ménagé dans le papillon 2.

Le rayon R5 vaut de une à deux fois la valeur de l'épaisseur de la tôle ep. Ce rayon R5 est le rayon minimum de pliage, imposé par l'épaisseur ep et le matériau de tôle et par le moyen d'obtention du profil.

Les rayons R1 et R3 sont sensiblement égaux et valent de trois à cinq fois l'épaisseur ep de la tôle.

Les rayons R2 et R4 sont, eux aussi, sensiblement égaux et valent de cinq à quinze fois l'épaisseur ep de la tôle.

L'arc α fait approximativement 90° d'angle.

Les valeurs d'angle des arcs β, δ et ε sont sensiblement égales et valent entre 50 et 60° d'angle tandis que l'angle de l'arc γ vaut de 2 à 10°, de telle manière que la somme des angles des arcs α, β, γ, δ et ε soit égale à 270°, afin d'obtenir une position parfaitement orthogonale des sections droites L1 et L2.

La pièce du joint placée dans le corps est constituée de la même façon que celle placée dans le papillon.

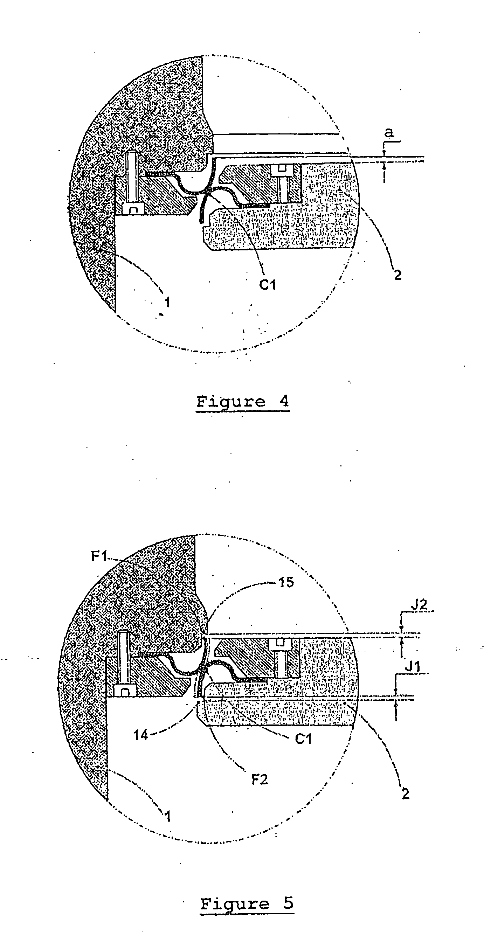

En se rapportant à la Figure 4, on constate que la construction du robinet, tel que présenté, impose que la fabrication des joints d'étanchéité 5 et 6 prévoit que les dimensions des parties courbes soient telles que ces joints entrent en contact l'un avec l'autre au point C1, avant même que l'obturateur 2 n'ait atteint sa position de pleine fermeture et qu'il reste un angle a compris entre 1 et 5° avant d'atteindre sa pleine fermeture.

Cette course résiduelle de 1 à 5° permet d'obtenir une précontrainte des joints l'un contre l'autre, lorsque la position fermée est complète. La Figure 5 montre le robinet lorsque l'obturateur 2 est en position de fermeture complète. On remarquera que les parties courbes 12 se sont déformées d'une valeur de flèche respectivement F1 et F2 sous l'action du contact C5 entre ces deux pièces. Dans cette position, le joint d'étanchéité du corps 5 présente un jeu J2 avec l'épaulement 15 du corps tandis que le joint de l'obturateur 6 présente un jeu J1 avec l'épaulement de l'obturateur 14.

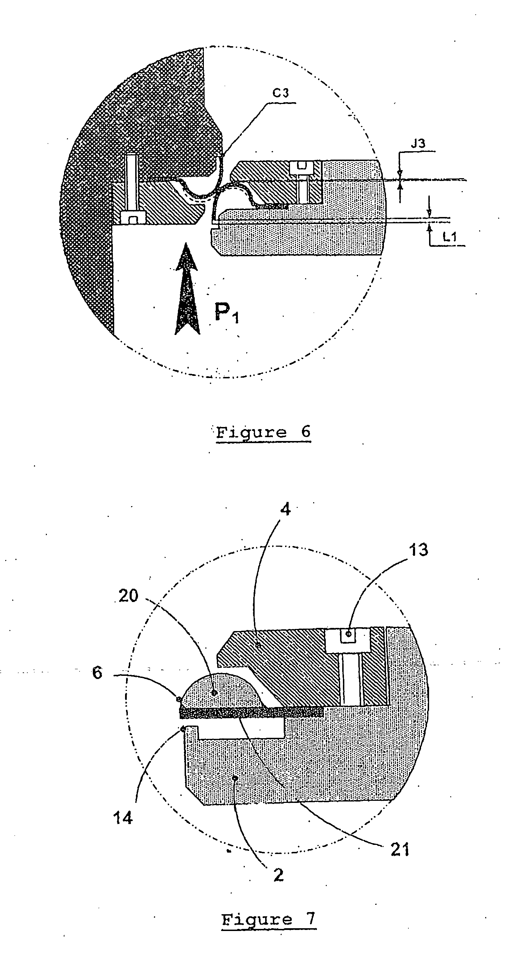

Suivant la Figure 6, le robinet fermé dans cette position présente suffisamment de précontrainte entre les deux joints 5 et 6 pour assurer une étanchéité à basse pression. Cette pression valant entre 3 et 10 bar. Lorsqu'une haute pression P1 s'établit du côté amont, la flexibilité des joints 5 et 6 va permettre une déformation et un déplacement d'une valeur L1 jusqu'à ce que le joint du corps 5 atteigne le contact C3 avec l'épaulement 15 du corps 1, tandis que le joint 6 de l'obturateur 2 présente un jeu J3 avec la contre-bride 4. Dans cette position, la pression de contact est au moins égale à la haute pression P1 augmentée de la précontrainte valant de 3 à 10 bar. Ceci garantit l'étanchéité parfaite de ce robinet en sens autoclave.

Le comportement du robinet est le même si la haute pression est appliquée en aval du papillon dans le sens non autoclave.

La description ci-dessus prévoit la construction des joints d'étanchéité en tôle formée. Lorsque les dimensions des robinets augmentent jusqu'à dépasser un mètre de diamètre, les outillages de formage deviennent excessivement chers et les puissances des moyens d'emboutissage à mettre en oeuvre deviennent prohibitives. Pour pallier cet inconvénient, il est proposé un mode de réalisation de joints massifs suivant la description ci-dessous.

Suivant la Figure 7, il est possible de réaliser les joints à partir d'un disque de tôle 21, sur lequel est soudé un anneau massif 20 de section demi-torique. Le papillon 2 est alors usiné différemment pour ménager un épaulement 14, qui limitera la déformée du disque 21 lors des mises sous pression.

Afin de pouvoir utiliser ce type de joint dans tous les domaines de température depuis la cryogénie jusqu'aux échappements de machine thermique, ces joints peuvent associer tout type de matériaux métalliques.

En cryogénie et pour les joints en tôle formée, il sera privilégié des matériaux conservant des caractéristiques mécaniques acceptables jusqu'à -196°C, à savoir un acier inoxydable fortement allié de type chrome/nickel/cobalt. Ses caractéristiques propres alliées à un fort écrouissage dû au formage des tôles lui confèrent de bonnes caractéristiques d'élasticité à toutes températures.

Pour les joints massifs de la variante, le disque de tôle 21 sera du même alliage chrome/nickel/cobalt, tandis que le demi-tore 20 sera, de préférence, d'un alliage plus malléable comme un acier inoxydable austénitique de type 316 ou 316L.

## Revendications

1. Robinet comprenant un joint d'étanchéité annulaire en tôle flexible, interposé entre un corps (1) et un obturateur (2), **caractérisé en ce que** le joint :
- est en deux pièces (5) et (6),
- chaque pièce (5) ou (6), d'un seul tenant, est fixée par une partie (11) de fixation, l'une au corps (1), l'autre à l'obturateur (2), **caractérisé en ce que**
- chaque pièce (5) ou (6) a une partie (12) courbe, la partie courbe de l'une des pièces tournant vers la droite et celle de l'autre pièce tournant vers la gauche, et
- les deux pièces (5) et (6) sont fixées dans le corps (1) et dans l'obturateur (2), de manière à venir en contact par la face convexe de leur partie (12) courbe.

2. Robinet suivant la revendication 1, **caractérisé en ce que** la tôle a une épaisseur comprise entre 1 et 4 mm.

3. Robinet suivant la revendication 2, **caractérisé en ce que** les segments des parties courbes, par lesquelles les deux pièces viennent en contact, ont un rayon de courbure représentant de trois à cinq fois l'épaisseur de la tôle.

4. Robinet suivant la revendication 3, **caractérisé en ce que** le rayon de courbure s'étend sur un arc de 50 à 60°.

5. Robinet suivant la revendication 3 ou 4, **caractérisé en ce que** les parties (12) courbes s'étendent suivant un angle de 270°.

6. Robinet suivant l'une des revendications 3 à 5, **caractérisé en ce que** le segment (δ), par lequel les parties (12) courbes viennent en contact, est suivi, dans le sens partant de la partie (11) de fixation, d'un segment (ε) s'étendant sur un arc représentant de cinq à quinze fois l'épaisseur de la tôle, terminé par un segment (40) rectiligne et est précédé, dans le sens allant vers la partie de fixation, d'un segment (γ) adjacent ayant un rayon de courbure représentant de cinq à quinze fois l'épaisseur de la tôle, d'un segment (β) ayant un rayon de courbure représentant de trois à cinq fois l'épaisseur de la tôle et d'un segment (α) ayant un rayon de courbure représentant de une à deux fois l'épaisseur de la tôle.

7. Robinet suivant l'une des revendications précédentes, **caractérisé en ce que** l'obturateur est un papillon à triple excentration et le corps et le papillon définissent respectivement des logements de fixation des parties (11) de fixation du joint et des butées (15) pour les extrémités du segment (40) rectiligne terminant leur partie courbe.

8. Robinet suivant la revendication 7, **caractérisé en ce que** les parties (12) courbes entrent en contact, alors qu'il reste un angle (a) de 1 à 5° avant d'atteindre la pleine fermeture.

## Patentansprüche

1. Ventil, umfassend eine Ringdichtung aus flexiblem Blech, die zwischen einem Gehäuse (1) und einem Verschluss (2) eingefügt ist, **dadurch gekennzeichnet, dass** die Dichtung:
- aus zwei Teilen (5) und (6) besteht,
- jedes einstückige Teil (5) oder (6) durch einen Befestigungsteil (11) befestigt ist, das eine an dem Gehäuse (1), das andere an dem Verschluss (2),
**dadurch gekennzeichnet, dass**
- jedes Teil (5) oder (6) einen gekrümmten Teil (12) aufweist, wobei sich der gekrümmte Teil von einem der Teile nach rechts wendet und derjenige des anderen Teils sich nach links wendet, und
- die beiden Teile (5) und (6) in dem Gehäuse (1) und in dem Verschluss (2) befestigt sind, so dass sie über die konvexe Seite ihres gekrümmten Teils (12) in Kontakt gelangen.

2. Ventil nach Anspruch 1, **dadurch gekennzeichnet, dass** das Blech eine Dicke im Bereich zwischen 1 und 4 mm aufweist.

3. Ventil nach Anspruch 2, **dadurch gekennzeichnet, dass** die Segmente der gekrümmten Teile, über die die beiden Teile in Kontakt gelangen, einen Krümmungsradius aufweisen, der das Drei- bis Fünffache der Dicke des Bleches ausmacht.

4. Ventil nach Anspruch 3, **dadurch gekennzeichnet, dass** der Krümmungsradius sich über einen Bogen von 50 bis 60° erstreckt.

5. Ventil nach Anspruch 3 oder 4, **dadurch gekennzeichnet, dass** die gekrümmten Teile (12) entlang eines 270°-Winkels verlaufen.

6. Ventil nach einem der Ansprüche 3 bis 5, **dadurch gekennzeichnet, dass** sich an das Segment (δ), über das die gekrümmten Teile (12) in Kontakt gelangen, in Richtung ausgehend von dem Befestigungsteil (11), ein sich über einen das Fünfbis Fünfzehnfache der Dicke des Bleches ausmachenden Bogen erstreckendes Segment (ε), das durch ein geradliniges Segment (40) abgeschlossen ist, anschließt, und ihm, in der zu dem Befestigungsteil hin verlaufenden Richtung, ein benachbartes Segment (γ), das einen das Fünf- bis Fünfzehnfache der Dicke des Bleches ausmachenden Krümmungsradius aufweist, ein Segment (β), das einen das Drei- bis Fünffache der Dicke des Bleches ausmachenden Krümmungsradius aufweist, sowie ein Segment (α), das einen das Ein- bis Zweifache der Dicke des Bleches ausmachenden Krümmungsradius aufweist, vorausgeht.

7. Ventil nach einem der vorhergehenden Ansprüche, **dadurch gekennzeichnet, dass** der Verschluss eine Drosselklappe mit dreifacher Exzentrizität ist und das Gehäuse und die Drosselklappe jeweils Aufnahmen zur Befestigung der Befestigungsteile (11) der Dichtung sowie Anschläge (15) für die Enden des ihren gekrümmten Teil abschließenden geradlinigen Segments (40) definieren.

8. Ventil nach Anspruch 7, **dadurch gekennzeichnet, dass** die gekrümmten Teile (12) in Kontakt gelangen, während ein Winkel (a) von 1 bis 5° verbleibt, bevor das vollständige Verschließen erreicht ist.

## Claims

1. Valve comprising an annular sealing gasket made of flexible sheet-metal which is interposed between a body (1) and a closure member (2), **characterised in that** the gasket:
- is in two pieces (5) and (6);
- each piece (5) or (6), which is in a single piece, is fixed by means of a fixing part (11), one to the body (1), the other to the closure member (2), **characterised in that**
- each piece (5) or (6) has a curved part (12), the curved part of one of the pieces facing towards the right and that of the other piece facing towards the left; and
- the two pieces (5) and (6) are fixed within the body (1) and within the closure member (2) in such a way as to come into contact via the convex face of their curved part (12).

2. Valve according to claim 1, **characterised in that** the metal sheet has a thickness of between 1 and 4 mm.

3. Valve according to claim 2, **characterised in that** the segments of the curved parts, via which the two pieces come into contact, have a radius of curvature representing from three to five times the thickness of the metal sheet.

4. Valve according to claim 3, **characterised in that** the radius of curvature extends over an arc of 50 to 60°.

5. Valve according to claim 3 or 4, **characterised in that** the curved parts (12) extend along an angle of 270°.

6. Valve according to one of claims 3 to 5, **characterised in that** the segment (δ), via which the curved parts (12) come into contact, is followed, in the direction that starts out from the fixing part (11), by a segment (ε) extending over an arc representing from five to fifteen times the thickness of the metal sheet and terminated by a straight segment (40), and is preceded, in the direction proceeding towards the fixing part, by an adjacent segment (γ) having a radius of curvature representing from five to fifteen times the thickness of the metal sheet, by a segment (β) having a radius of curvature representing from three to five times the thickness of the metal sheet and by a segment (α) having a radius of curvature representing from one to two times the thickness of the metal sheet.

7. Valve according to one of the preceding claims, **characterised in that** the closure member is a butterfly valve with triple off-centring, and the body and the butterfly respectively define housings for fixing the parts (11) for fixing the gasket, and stops (15) for the ends of the straight segment (40) that terminates their curved part.

8. Valve according to claim 7, **characterised in that** the curved parts (12) come into contact while an angle (a) of 1 to 5° remains before full closure is reached.
